# EUROPEAN PATENT SPECIFICATION

(11) **EP 0 494 751 B1**
(45) Date of publication and mention of the grant of the patent: **12.11.1997**
(21) Application number: 92300107.7
(22) Date of filing: 07.01.1992
(51) Int. Cl.: G02F 1/313

(54) **Directional coupler type optical function element**
Richtkoppler-optisches Funktions-Element
Elément à fonction optique du type coupleur directif

(30) Priority: 07.01.1991 JP 267/91; 07.01.1991 JP 268/91
(43) Date of publication of application: 15.07.1992
(73) Proprietor: THE FURUKAWA ELECTRIC CO., LTD., Tokyo (JP)
(72) Inventor: Mak, Hon-Ming, Ichihara-shi, Chiba (JP); Yanagawa, Hisaharu, c/o The Furukawa Electric Co., Chiyoda-ku, Tokyo (JP)
(74) Representative: Tomlinson, Kerry John

(56) References cited:
- EP-A- 0 378 300
- 17TH EUROPEAN CONFERENCE ON OPTICAL COMMUNICATION ECOC 91 September 1991, Paris, FR, pages 525-528; H.M. MAK et al.: 'High extinction guided-wave devices using directional coupler'

## Description

The present invention relates to a directional coupler type optical function element of a novel construction, and more particularly, to a directional coupler type optical function element having very high extinction ratio characteristics and adapted for use as an optical switch, polarizing splitter, optical modulator, wavelength division multiplexer/demultiplexer, etc.

Recently, various optical function elements having a directional coupler of a waveguide type have been developed, and optical switches, polarizing splitters, optical modulators, wavelength division multiplexer/demultiplexers, etc. using these elements have been proposed.

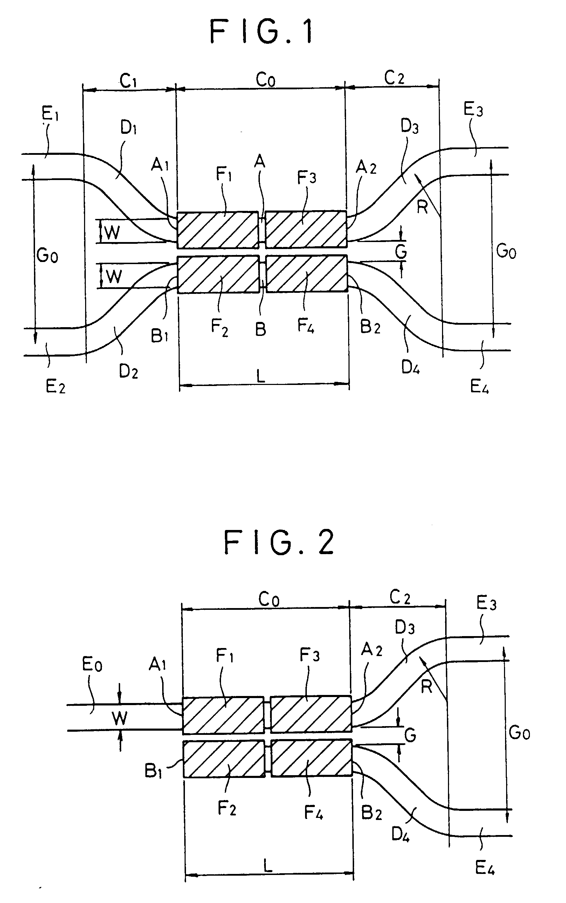

Figs. 1 and 2 show examples of conventional optical function elements of a directional coupler type. The element shown in Fig. 1 is a 2-input/2-output element, while the element shown in Fig. 2 is a 1-input/2-output element.

EP-A-378300 discloses a conventional directional coupler employing a reversed Δβ electrode structure and a central junction.

In Fig. 1, a junction C₀ of a length L is formed by arranging two optical waveguides A and B of equal widths W close to each other in parallel relation, with a distance G for evanescent connection between them.

Curved optical waveguides D₁, D₂, D₃ and D₄ with a path width W and curvature radius R are optically connected to the respective incidence ends A₁ and B₁ and emergence ends A₂ and B₂ of the optical waveguides A and B of the junction C₀, respectively, thus forming incidence-side lead section C₁ and emergence-side lead section C₂. Also, straight optical waveguides E₁, E₂, E₃ and E₄ with the path width W are optically connected to the curved optical waveguides D₁, D₂, D₃ and D₄, respectively, with a distance G₀ between the respective path-width centers of the waveguides E₁ and E₂ and between those of the waveguides E₃ and E₄. Electrodes F₁, F₂, F₃ and F₄ are mounted on the optical waveguides A and B of the junction C₀ so that electrical signals can be introduced from the electrodes into the waveguides. The distances between the electrodes F₁ and F₃ and between the electrodes F₂ and F₄ are substantially zero.

If the straight optical waveguide E₁ is an incidence port, the straight optical waveguides E₃ and E₄ serve as a through port and a cross port, respectively.

The 1-input/2-output element of Fig. 2 is a modified version of the 2-input/2-output element of Fig. 1, in which one straight optical waveguide E₀ is optically connected to only the incidence end A₁ of the optical waveguide A in a direct manner. In this element, the straight optical waveguide E₀ is an incidence port, and the straight optical waveguides E₃ and E₄ serve as a through port and a cross port, respectively.

In order to incorporate these elements in a fiber communication system, which is going to be practically used, it is necessary to prevent errors attributable to cross talk. Thus, the elements are expected to be subject to less cross talk, that is, to have high extinction ratio characteristics.

In the case of the element shown in Fig. 1, a theoretically perfect cross mode is established to heighten the extinction ratio without limitation by applying proper electrical signals from the electrodes F₁, F₂, F₃ and F₄. Connections at the incidence- and emergence-side lead sections C₁ and C₂ cannot, however, provide a perfect through mode, and in this case, the theoretical value of the extinction ratio ranges from about 20 to 30 dB at the highest.

In the case of the element shown in Fig. 2, moreover, the extinction ratio for the through mode can be made about 10 dB higher than that of the element shown in Fig. 1. For the cross mode, however, the extinction ratio ranges from only about 10 to 20 dB.

Thus, the conventional elements, which have a low extinction ratio for the through or cross mode, cannot exhibit high extinction ratio characteristics for both the through and cross modes.

The extinction ratio used here is a value given by the followed equation: 10 log₁₀( | r | ²/ | s | ²), where | r | ² is the output power of the through port, and | s | ² is the output power of the cross port.

Among optical function elements constructed in this manner, known examples of those which have relatively high extinction ratio characteristics include an optical switch with an extinction ratio of about 27 dB reported in Technical Digest Integrated and Guide-wave Optics '86 by P. Granestrand et al. and a polarizing splitter with an extinction ratio of about 28 dB reported in the 1990 Autumn National Meeting C-216 of the Institute of Electronic Intelligence and Communication Engineers of Japan by H.M. Mak et al.

Meanwhile, those optical function elements which are practically used in an optical communication system are expected to have an extinction ratio of 15 dB or more.

To meet this requirement, intense studies have been made of the causes of low extinction ratios of directional coupler type optical function elements.

Among these studies, there is one whose results are described in Institution of Electrical and Electronics Engineers Journal (IEEE. J.) of Quantum Electronics (Vol. 24, March, 1988) by Jean-Pierre Weber et al. This description indicates that the low extinction ratio is attributable to difficulty in refractive index control of the directional coupler for a required switching state.

L. McCanghan et al. also reported in IEEE. J. of Quantum Electronics (Vol. QE-22, No. 6, June, 1986) that the low extinction ratio is attributable to the irregularity of the refractive index of optical waveguides with respect to the extending direction thereof (direction of light propagation).

Further, T.K. Findakly et al. indicated the following in Journal of Lightwave Technology (Vol. 6, No. 1, January, 1988). According to this report, the extinction ratio is inevitably lowered because in a through mode there exist small connections at incidence- and emergence-side lead sections for connecting optical fibers.

Among the three causes described in these reports, the one reported by Jean-Pierre Weber et al. can be removed by properly selecting the method of driving the element and the material of the optical waveguides. Further, the cause reported by L. McCanghan et al. can be removed by improving film growth control during the formation of the optical waveguides.

The cause indicated by T.K. Findakly et al., however, is an unavoidable problem which cannot be solved unless the outside diameter of the optical fiber to be connected is reduced to several micrometers so that the element requires no lead sections.

In the case of the optical function element of the conventional construction shown in Fig. 1, the extinction ratio is lowered only for the through mode due to the connections at the incidence- and emergence-side lead sections C₁ and C₂ even though the element is a perfectly symmetrical directional coupler.

The extinction ratio characteristics of the optical function element depend on the lower one of the extinction ratios for the through and cross modes. Even in case the extinction ratio for the cross mode is unlimited, therefore, the whole element can enjoy only a low extinction ratio if that for the through mode is low.

In the case of the optical function element shown in Fig. 1, moreover, the extinction ratio for the cross mode can be also lowered if the incidence- and emergence-side lead sections C₁ and C₂ do not have the same configuration.

In many of practical versions of the element of Fig. 1, for example, the radius of curvature of the incidence-side lead section C₁ is different from that of the emergence-side lead section C₂, so that these sections are not symmetrical. In such a case, the extinction ratio for the cross mode, as well as that for the through mode, is lowered for the aforesaid reason.

Thus, in the conventional directional coupler type optical function elements, the extinction ratio for the through mode is low, and that for the cross mode is also lowered if the incidence- and emergence-side lead sections C₁ and C₂ are not symmetrical.

The object of the present invention is to provide a directional coupler type optical function element of a novel construction capable of exhibiting an extinction ratio of 30 dB or more for either of through and cross modes.

In order to achieve the above object, according to the present invention, there is provided a directional coupler type optical element comprising:
a junction having two parallel optical waveguides of equal widths formed of a material exhibiting an electrooptical effect or a material capable of refractive index control by means of an electrical signal;
an optical waveguide optically connected to the incidence end of one of said two optical waveguides ; and
curved or straight optical waveguides optically connected to the respective emergence ends of said two optical waveguides;
said junction including:
a front-stage partial junction with electrode;
a central partial junction; and
a rear-stage partial junction with electrode of the same length as that of the front-stage partial junction with electrode;
wherein said junction further comprises:
an additional front-stage partial junction for optically coupling between the waveguides, and optionally an additional rear-stage partial junction for optically coupling between the waveguides, wherein the length(s) of the additional partial junction(s) are such that the extinction ratio of the optical element is 30dB or more.

The object is also achieved by providing a directional coupler type optical element comprising:
a junction having two parallel optical waveguides of equal widths formed of a material exhibiting an electrooptical effect or a material capable of refractive index control by means of an electrical signal;
optical waveguides optically connected to the respective incidence ends of said two optical waveguides; and
curved or straight optical waveguides optically connected to the respective emergence ends of said two optical waveguides;
said junction including:
a front-stage partial junction with electrode;
a central partial junction; and
a rear-stage partial junction with electrode of the same length as that of the front-stage partial junction with electrode;
wherein said junction further comprises:
an additional rear-stage partial junction for optically coupling between the waveguides, and optionally an additional front-stage partial junction for optically coupling between the waveguides, wherein the length(s) of the additional partial junction(s) are such that the extinction ratio of the optical element is 30dB or more.

There will now be described, by way of example only, preferred embodiments of the invention, with reference to the accompanying drawings, in which:
Fig. 1 is a plane pattern diagram showing a configuration of a conventional 2-input/2-output directional coupler;
Fig. 2 is a plane pattern diagram showing a configuration of a conventional 1-input/2-output directional coupler;
Fig. 3 is a plane pattern diagram showing the basic configuration of a 2-input/2-output directional coupler type optical function element according to the present invention;
Fig. 4 is a plane pattern diagram showing an example of connection of electrodes mounted on a junction of the optical function element of Fig. 3 whose optical waveguides are formed of a semiconductor material;
Fig. 5 is a plane pattern diagram showing an example of connection of electrodes mounted on a junction of the optical function element of Fig. 3 whose optical waveguides are formed of a dielectric material;
Fig. 6 is a plane pattern diagram showing another example of connection of electrodes mounted on the junction of the optical function element of Fig. 3 whose optical waveguides are formed of a dielectric material;
Fig. 7 is a plane pattern diagram showing the basic configuration of a 1-input/2-output directional coupler type optical function element according to the present invention;
Fig. 8 is a plane pattern diagram showing an example of connection of electrodes mounted on a junction of the optical function element of Fig. 7 whose optical waveguides are formed of a semiconductor material;
Fig. 9 is a plane pattern diagram showing an example of connection of electrodes mounted on a junction of the optical function element of Fig. 7 whose optical waveguides are formed of a dielectric material;
Fig. 10 is a plane pattern diagram showing another example of connection of electrodes mounted on the junction of the optical function element of Fig. 7 whose optical waveguides are formed of a dielectric material;
Fig. 11 is a plane pattern diagram showing a 2-input/2-output directional coupler type optical function element according to Embodiment 1;
Fig. 12 is a sectional view taken along line XII-XII of Fig. 11:
Fig. 13 is a sectional view taken along line XIII-XIII of Fig. 11;
Fig. 14 shows a theoretical characteristic curve representing the switching characteristic of the optical function element of Embodiment 1;
Fig. 15 is a graph showing the relationship between the extinction ratio and value p₂ of the optical function element of Embodiment 1;
Fig. 16 is a plane pattern diagram showing a 1-input/2-output directional coupler type optical function element according to Embodiment 2 or 3;
Fig. 17 shows a theoretical characteristic curve representing the switching characteristic of the optical function element of Embodiment 2;
Fig. 18 is a graph showing the relationship between the extinction ratio and value p₂ of the optical function element of Embodiment 2;
Fig. 19 is a graph showing the theoretical relationship between the extinction ratio and value p₁ of the optical function element of Embodiment 2 observed where p₂ = p₃ = 0 is given;
Fig. 20 shows a theoretical characteristic curve representing the switching characteristic of the optical function element of Embodiment 3; and
Fig. 21 is a graph showing the relationship between the extinction ratio and value p₂ of the optical function element of Embodiment 3.

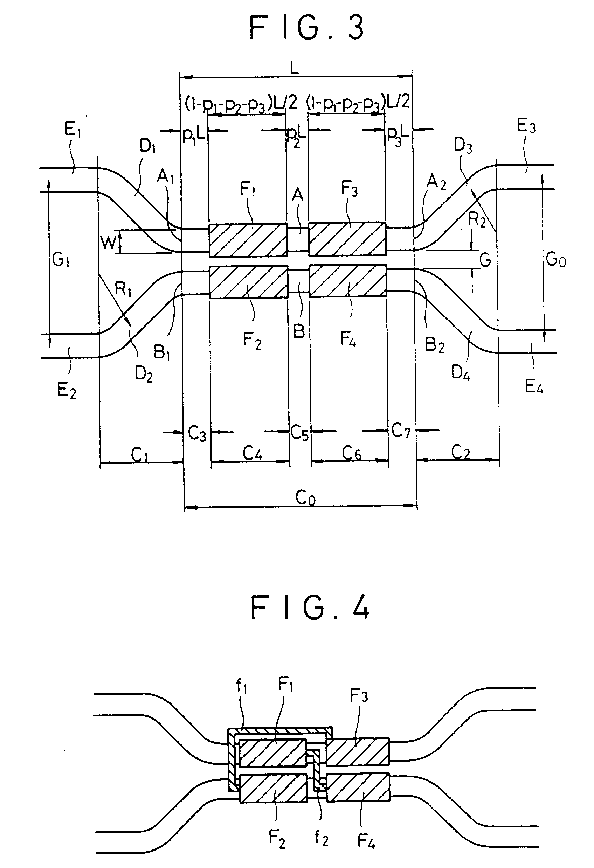

Fig. 3 is a plane pattern diagram showing the basic configuration of a 2-input/2-output directional coupler type optical function element according to an embodiment of the present invention. As seen from Fig. 3, a plane pattern of the optical function element differs from the conventional 2-input/2-output directional coupler type optical function element shown in Fig. 1 only in that a junction Co is constructed as follows.

First, two optical waveguides A and B with the same width (path width W) are arranged parallel to each other with a fine space G between them at the junction C₀, and curved optical waveguides D₁ and D₂ with a curvature radius R₁ and a path width W are optically connected to incidence ends A₁ and B₁ of the waveguides A and B, respectively, thus constituting an incidence-side lead section C₁. Likewise, curved optical waveguides D₃ and D₄ with a curvature radius R₂ and the path width W are optically connected to emergence ends A₂ and B₂ of the waveguides A and B, respectively, thus constituting an emergence-side lead section C₂. At the incidence-side lead section C₁, moreover, straight optical waveguides E₁ and E₂ with the path width W are optically connected to the curved optical waveguides D₁ and D₂, respectively, so that the distance between the respective centers of the waveguides E₁ and E₂ is G₁. At the emergence-side lead section C₂, on the other hand, straight optical waveguides E₃ and E₄ with the path width W are optically connected to the curved optical waveguides D₃ and D₄, respectively, so that the distance between the respective centers of the waveguides E₃ and E₄ is G₀. If the straight optical waveguide E₁ is an incidence port, the straight optical waveguides E₃ and E₄ serve as a through port and a cross port, respectively.

The incidence- and emergence-side lead sections C₁ and C₂ are not limited to the illustrated arrangement including the curved optical waveguides. Alternatively, for example, the incidence end A₁ and the straight optical waveguide E₁, the incidence end B₁ and the straight optical waveguide E₂, the emergence end A₂ and the straight optical waveguide E₃, and the emergence end B₂ and the straight optical waveguide E₄ may be optically connected to one another by means of finely tapered straight optical waveguides, individually.

Any of these optical waveguides is formed of a material which generates an electrooptical effect or a material of a structure such that its refractive index can be controlled by means of an electrical signal. For example, each optical waveguide may be a multilayer laminate structure of a semiconductive material, such as GaAs/AlGaAs, formed by the MOCVD method.

The junction C₀ is formed by optically connecting a front-stage partial junction C₃, front-stage partial junction C₄ with electrode, central partial junction C₅, rear-stage partial junction C₆ with electrode, and rear-stage partial junction C₇, in the order named, ranging from the incidence ends A₁ and B₁ to the emergence ends A₂ and B₂ thereof.

If the overall length of the junction C₀ is L, and if p₁, p₂ and p₃ are decimals or zero satisfying a relation p₁ + p₂ + p₃ < 1 (p₂ ≠ 0), the length of the front-stage partial junction C₃ is p₁ × L, that of the front-stage partial junction C₄ with electrode is (1 - p₁ - p₂ - p₃) × L/2, that of the central partial junction C₅ is p₂ × L, that of the rear-stage partial junction C₆ with electrode is (1 - p₁ - p₂ - p₃) × L/2, and that of the rear-stage partial junction C₇ is p₃ × L.

In this case, the combination of the incidence-side lead section C₁ and the front-stage partial junction C₃ newly constitutes an equivalent incidence-side lead section (C₁ + C₃), while the combination of the emergence-side lead section C₂ and the rear-stage partial junction C₇ newly constitutes an equivalent emergence-side lead section (C₂ + C₇). Thus, the coefficients p₁ and p₃ are selected as values which determine the respective lengths of the front- and rear-stage partial junctions C₃ and C₇ in a manner such that the connection (or coupling effect) at the combination of the incidence-side lead section C₁ and the front-stage partial junction C₃ is similar to the connection (or coupling effect) at the combination of the emergence-side lead section C₂ and the rear-stage partial junction C₇, so that the element can enjoy a perfectly symmetrical connection state as a whole for the entire equivalent incidence-and emergence-side lead sections.

The coefficient p₂ is selected as a value such that the coupling effect of the central partial junction C₅ is equal to the sum of the coupling effect of (C₁ + C₃) and (C₂ + C₇). That is the central partial junction C₅ has a length corresponding to a maximum value of the extinction ratio as measured in a through mode with the length of the junction C₅ varied.

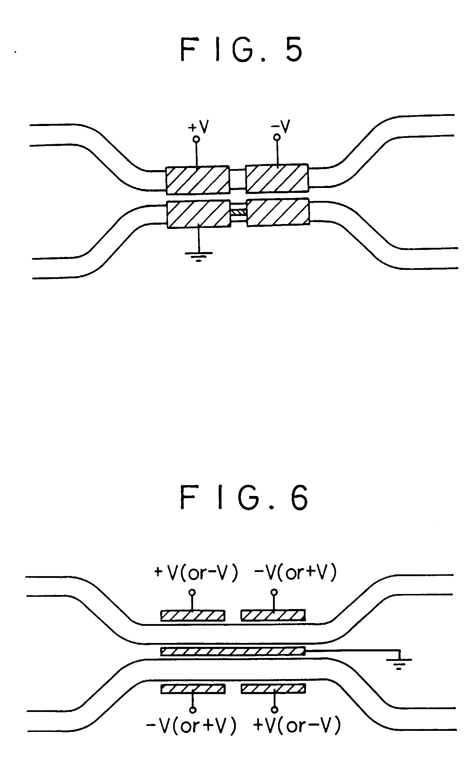

The states of connection between electrodes F₁, F₂, F₃ and F₄ at the partial junctions C₄ and C₆ vary depending on the optical waveguide material used. If the waveguide material is a semiconductor, for example, it is necessary only to provide an inverted Δ β structure such that the electrodes F₂ and F₃ and the electrodes F₁ and F₄ are connected by means of leads f₁ and f₂, respectively, as shown in Fig. 4. If the waveguide material is a dielectric, such as LiNbO₃, it is necessary only to make connections corresponding to the crystalline orientation of the dielectric, as shown in Figs. 5 and 6.

In the optical function element of the embodiment, the equivalent incidence-side lead section (C₁ + C₃), formed of the incidence-side lead section C₁ and the front-stage partial junction C₃, and the equivalent emergence-side lead section (C₂ + C₇), formed of the emergence-side lead section C₂ and the rear-stage partial junction C₇, serve that the coupling effect of section (C₂ + C₇) equals the coupling effect of section (C₁ + C₃). In the element as a whole, therefore, the front-stage partial junction C₄ with electrode, central partial junction C₅, and rear-stage partial junction C₆ with electrode develop a state equivalent to the one obtained in the case where the incidence- and emergence-side lead sections are perfectly symmetrical. Thus, the extinction ratio for a cross mode can be prevented from lowering.

The central partial junction C₅ formed in the junction C₀ is adjusted to a length such that the extinction ratio has a maximum in the through mode, that is, a connection (or coupling effect) equivalent to the connection (or coupling effect) at the combination of the incidence- and emergence-side lead sections C₁ and C₂ and the partial junctions C₃ and C₇ can be obtained. In this case, the extinction ratio for the through mode is unlimited theoretically.

Thus, in the optical function element of the embodiment, the extinction ratio for either of the cross and through modes is much higher than in the conventional cases.

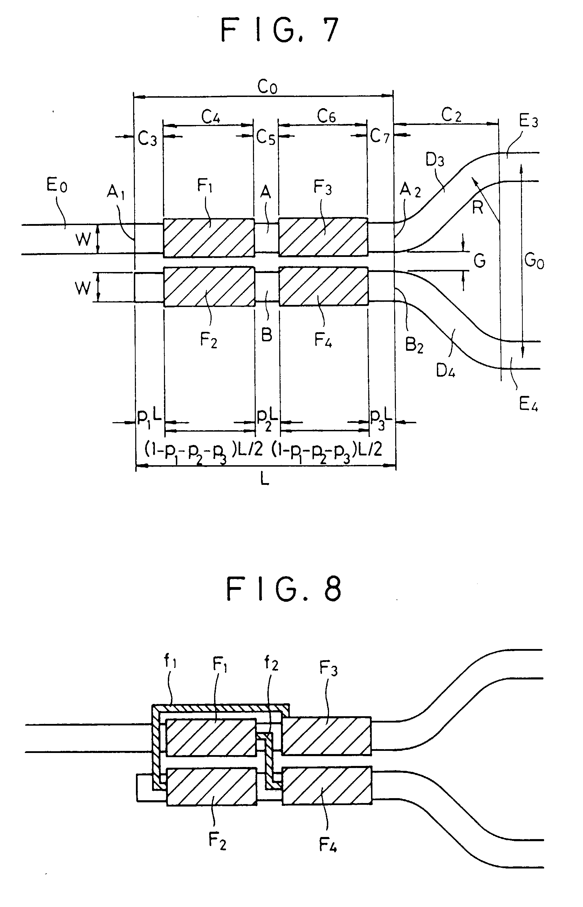

Fig. 7 shows the basic configuration of a 1-input/2-output directional coupler type optical function element according to an embodiment of the present invention.

A plane pattern of this optical function element differs from the conventional 1-input/2-output directional coupler type optical function element shown in Fig. 2 only in that a junction C₀ is constructed as follows.

First, two optical waveguides A and B with the same width (path width W) are arranged parallel to each other with a fine space G between them at the junction C₀, and a straight optical waveguide E₀ with a path width W is optically connected to an incidence end A₁ of the one waveguide A, thus constituting an incidence port. Also, curved optical waveguides D₃ and D₄ with a curvature radius R and the path width W are optically connected to emergence ends A₂ and B₂ of the waveguides A and B, respectively, thus constituting an emergence-side lead section C₂. Moreover, straight optical waveguides E₃ and E₄ with the path width W are optically connected to the curved optical waveguides D₃ and D₄, respectively, so that the distance between the respective path-width centers of the waveguides E₃ and E₄ is G₀, thus constituting a through port (E₃) and a cross port (E₄), respectively.

In the case of this optical function element, as in the case of the element shown in Fig. 3, the emergence-side lead section C₂ is not limited to the illustrated arrangement including the curved optical waveguides. Alternatively, for example, the emergence ends A₂ and B₂ may be optically connected to the straight optical waveguides E₃ and E₄, respectively, by means of finely angled straight optical waveguides.

Any of these optical waveguides, like those of the optical function element shown in Fig. 3, is formed of a material which generates an electrooptical effect or a material of a structure such that its refractive index can be controlled by means of an electrical signal.

As in the case of the optical function element shown in Fig. 3, the junction C₀ is formed by optically connecting a front-stage partial junction C₃, front-stage partial junction C₄ with electrode, central partial junction C₅, rear-stage partial junction C₆ with electrode, and rear-stage partial junction C₇, in the order named, ranging from the incidence end A₁ to the emergence ends A₂ and B₂ thereof.

If the overall length of the junction C₀ is L, and if p₁, p₂ and p₃ are decimals or zero satisfying a relation p₁ + p₂ + p₃ < 1 (p₁, p₂ ≠ 0), the length of the front-stage partial junction C₃ is p₁ × L, that of the front-stage partial junction C₄ with electrode is (1 - p₁ - p₂ - p₃) × L/2, that of the central partial junction C₅ is p₂ × L, that of the rear-stage partial junction C₆ with electrode is (1 - p₁ - p₂-p₃) × L/2, and that of the rear-stage partial junction C₇ is p₃ × L.

In this case, the coefficients p₁ and p₃ are selected as values such that the connection at the front-stage partial junction C₃ with the length p₁ × L is similar to the connection at the combination of the rear-stage partial junction C₇ and the emergence-side lead section C₂, so that the whole element,is equivalent to the one obtained in the case where the incidence- and emergence-side lead sections are perfectly symmetrical.

The coefficient p₂ is selected as a value such that the central partial junction C₅ has a length corresponding to a maximum value of the extinction ratio as measured in a through mode with the length of the junction C₅ varied.

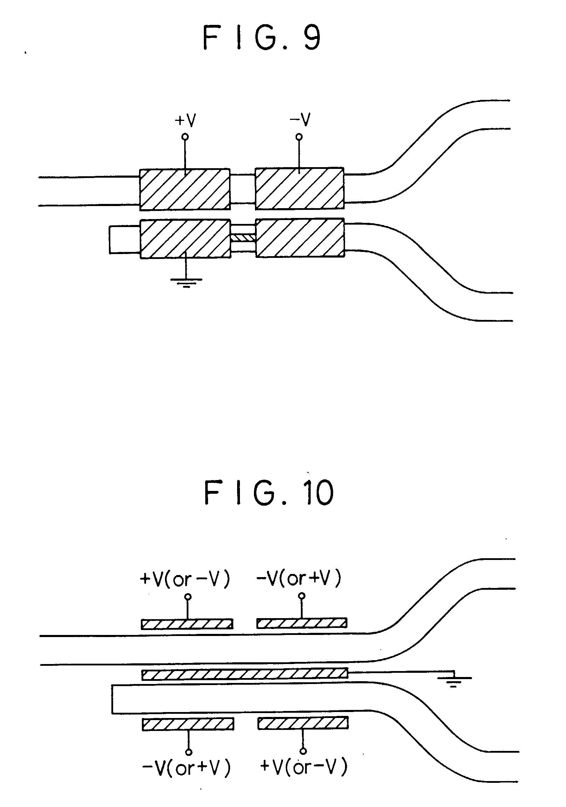

The states of connection between electrodes F₁, F₂, F₃ and F₄ at the partial junctions C₄ and C₆ vary depending on the optical waveguide material used. If the waveguide material is a semiconductor, for example, it is necessary only to provide an inverted Δ β structure such that the electrodes F₂ and F₃ and the electrodes F₁ and F₄ are connected by means of leads f₁ and f₂, respectively, as shown in Fig. 8. If the waveguide material is a dielectric, such as LiNbO₃, it is necessary only to make connections corresponding to the crystalline orientation of the dielectric, as shown in Figs. 9 and 10.

Also in the case of this 1-input/2-output directional coupler type optical function element, the connection at the front-stage partial junction C₃ is similar to the connection at the combination of the rear-stage partial junction C₇ and the emergence-side lead section C₂. In this directional coupler as a whole, therefore, the front-stage partial junction C₄ with electrode, central partial junction C₅, and rear-stage partial junction C₆ with electrode generate a state equivalent to the one obtained in the case where the incidence- and emergence-side lead sections are perfectly symmetrical. Thus, the extinction ratio can be prevented from lowering in a cross mode.

The central partial junction C₅ is adjusted to a length such that the extinction ratio for the through mode has its maximum.

Thus, also in the case of this optical function element, the extinction ratio for either of the cross and through modes is much higher than in the conventional case shown in Fig. 2.

### [Embodiment 1]

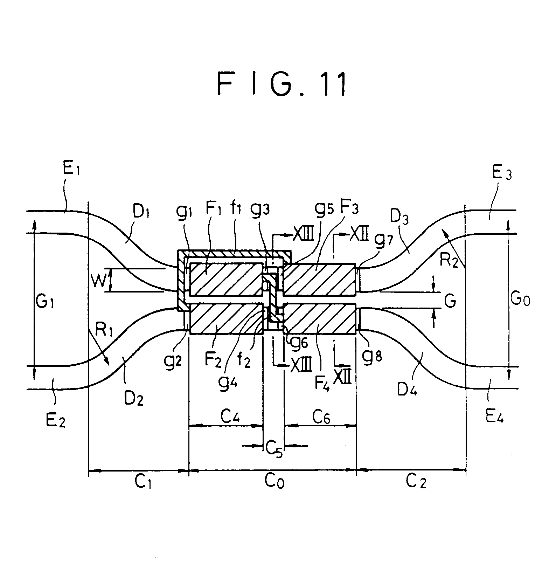

2-input/2-output directional coupler type optical function element shown in the plane pattern diagram of Fig. 11 was manufactured. This optical function element is a modified version of the element shown in Fig. 3, in which the length of the junction C₀ is 8 mm, the path width W is 7 µm, the distances G₀ and G₁ between the through port E₃ and the cross port E₄ and between the incidence ports E₁ and E₂ are both 250 µm, the distance G between the optical waveguides A and B is 3.5 µm, the curvature radius R₁ of the curved optical waveguides D₁ and D₂ is 50 mm, the curvature radius R₂ of the curved optical waveguides D₃ and D₄ is 30 mm, p₁ = 0, the length of the central partial junction C₅ is 656 µm (p₂ = 0.082), and the length of the rear-stage partial junction C₇ is 59 µm (p₃ = 0.007375).

Gaps g₁ and g₂, g₃ and g₄, g₅ and g₆, and g₇ and g₈ with a length of several micrometers are formed between the incidence-side lead section C₁ and the front-stage partial junction C₄ with electrode, between the partial junction C₄ and the central partial junction C₅, between the partial junction C₅ and the rear-stage partial junction C₆ with electrode. and between the partial junction C₆ and the emergence-side lead section C₂, respectively. These gaps are provided lest an electrical signal introduced into each electrode influence other electrodes.

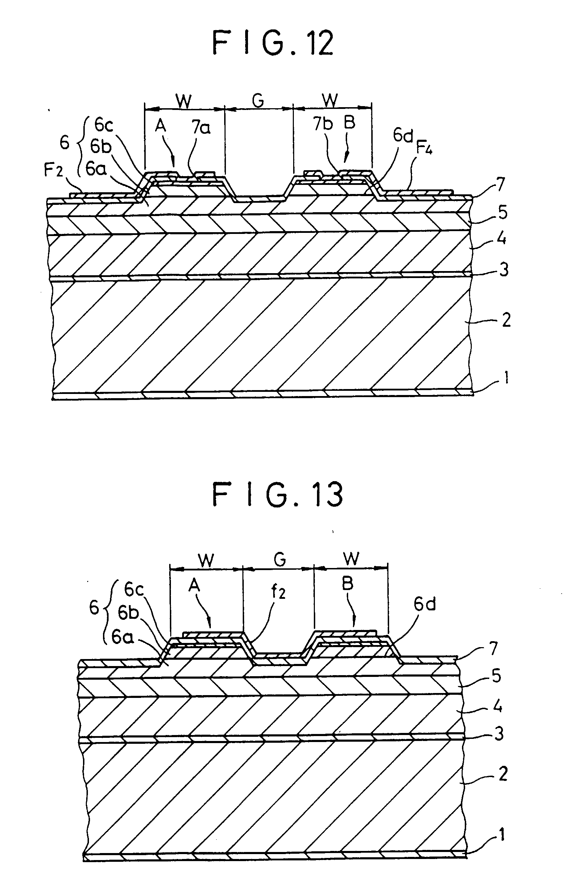

The front- and rear-stage partial junctions C₄ arid C₆ with electrode and the central partial junction C₅ of the junction C₀ are arranged as shown in Figs. 12 and 13, which are sectional views taken along lines XII-XII and XIII-XIII, respectively, of Fig. 11.

More specifically, a substrate 2 of n⁺GaAs, a buffer layer of n⁺GaAlAs with a thickness of 0.5 µm, a lower cladding layer 4 of n⁺GaAlAs with a thickness of 3.0 µm, and a core layer 5 of n⁻GaAs with a thickness of 1.0 µm are stacked in layers on a lower electrode 1 of AuGeNi/Au, in the order named, by the MOCVD method. Further, a cladding 6a of n⁻GaAlAs, a cladding 6b of p⁻GaAlAs, and a cap 6c of p⁺GaAs are successively stacked in layers on the core layer 5 by the MOCVD method, thus constituting an upper cladding layer 6. The top of the cladding layer 6 is coated with an insulating film 7, such as an SiO₂ film. Thus, the two optical waveguides A and B with the path width W are formed ridge-shaped with the distance G between them.

At the regions where the electrodes F₁, F₂, F₃ and F₄ are to be mounted, as shown in Fig. 12, part of the insulating film 7 is removed to form a slit-shaped window 7a. Ti/Pt/Au is, for example, deposited on the top face of the cap 6c through the window 7a, thus forming the electrodes F₃ and F₄.

In Fig. 13, the lead f₂ for connecting the electrodes F₁ and F₄ is formed on the insulating film 7.

In the optical waveguides A and B formed in this manner, the interface between the claddings 6a and 6b constitutes a pn-junction interface 6d. If specific electrical signals are introduced from the electrodes F₁, F₂, F₃ and F₄, therefore, an electrooptical effect, plasma effect, band filling effect, etc. develop at the pn-junction interface 6d, so that the refractive index of those portions of the core layer which are situated right under the electrodes changes, and hence, the state of optical connection between the optical waveguides A and B changes.

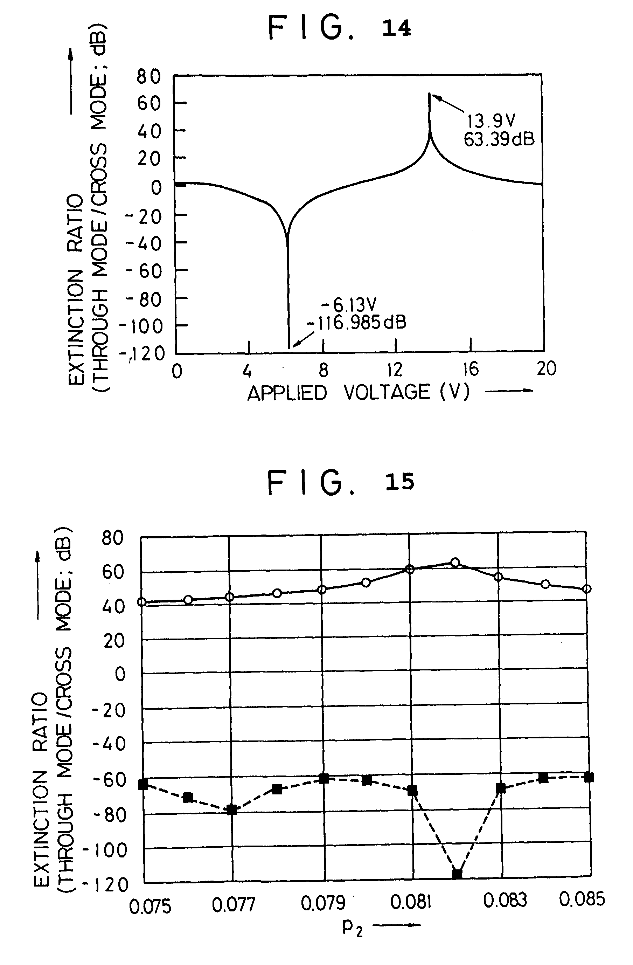

Fig. 14 shows a theoretical characteristic curve representing the switching characteristic of this element obtained when a TE mode light beam with a wavelength of 1.3 µm is excited at the incidence port E₁, and when only the electrooptical effect is developed by applying reverse bias voltage to the electrodes.

When the element is actually driven by means of the reverse bias voltage, the extinction ratio can be estimited at 30 dB or more if the applied voltage in the cross mode is -7 V or if the applied voltage in the through mode is -15 V, in view of the conditions of a measurement system.

Fig. 15 shows the relationship between the fluctuation of the extinction ratio and the coefficient p₂ of the element observed when the coefficient p₂ is varied to change the length p₂ × L of the central partial junction C₅. In Fig. 15, circles and black squares represent the through mode and the cross mode, respectively. As seen from Fig. 15, this element exhibits the extinction ratio of 60 dB or more.

In the case of this element, moreover, the extinction ratio for the cross mode is not lowered despite the different curvature radii of the incidence- and emergence-side lead sections C₁ and C₂.

### [Embodiment 2]

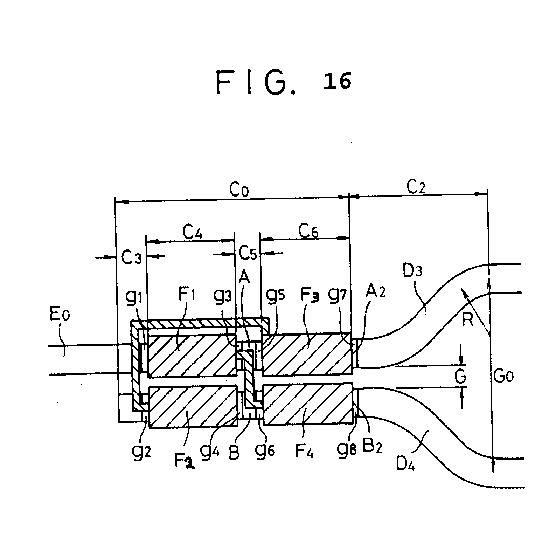

A 1-input/2-output directional coupler type optical function element was manufactured, as shown in the plane pattern diagram of Fig.16. This optical function element is a modified version of the element shown in Fig. 7, in which p₃ = 0 is given, that is, the emergence ends A₂ and B₂ of the optical waveguides A and B are optically connected to the curved optical waveguides D₃ and D₄, respectively, in a direct manner, without using the rear-stage partial junction.

In Fig. 16, the length of the junction C₀ is 7.5 mm, the distance G between the optical waveguides A and B is 3.5 µm, the distance Go between the respective path-width centers of the through port E₃ and the cross port E₄ is 250 µm. the curvature radius R of the curved optical waveguides D₃ and D₄, which constitute the emergence-side lead section C₂, is 30 mm, and the path width W is 7 µm. In this element, as in the case of the element of Embodiment 1, gaps g₁ and g₂, g₃ and g₄, g₅ and g₆, and g₇ and g₈ are formed between the individual partial junctions lest an electrical signal introduced into each electrode adversely affect other electrodes.

The length p₁ × L of the front-stage partial junction C₃ is 267 µm (p₁ = 0.0356), the length p₂ × L of the central partial junction C₅ is 540 µm (p₂ = 0.072), and those of the front-stage partial junction C₄ with electrode and the rear-stage partial junction C₆ with electrode are both 3.3465 mm.

The front- and rear-stage partial junctions C₄ and C₆ with electrode and the central partial junction C₅ of the junction C₀ have the same sectional configurations as the ones described in connection with the optical function element of Embodiment 1.

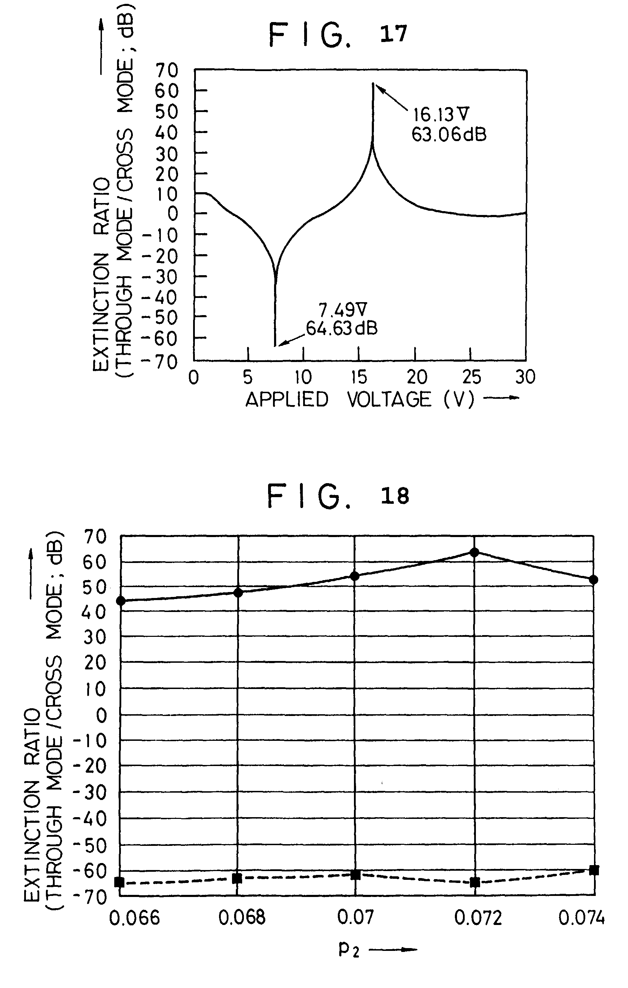

Fig. 17 shows a theoretical characteristic curve representing the switching characteristic of this element obtained when a TE mode light beam with a wavelength of 1.3 µm is excited at the incidence port E₀, and when only the electrooptical effect is developed by applying reverse bias voltage to the electrodes.

When the element is actually driven by means of the reverse bias voltage, the extinction ratio can be estimated at 30 dB or more if the applied voltage in the cross mode is -8.5 V or if the applied voltage in the through mode is -19 V, in view of the conditions of a measurement system.

Fig. 18 shows the relationship between the fluctuation of the extinction ratio and the coefficient p₂ of the element observed when the coefficient p₂ is varied to change the length p₂ × L of the central partial junction C₅. In Fig. 18, black spots and black squares represent the through mode and the cross mode, respectively.

As seen from Fig. 18, this element can enjoy the extinction ratio of 40 dB or more without regard to the mode, through or cross, even if p₂ or the length of the central partial junction C₅ somewhat varies.

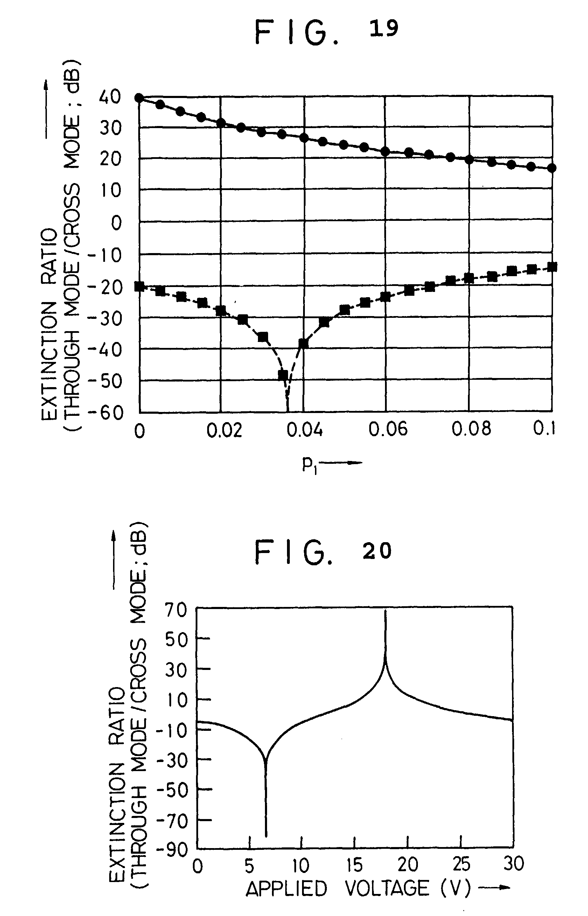

It is evident from Fig. 18 along with Fig. 19 mentioned below, moreover, that the coefficients p₁, p₂ and p₃ should be selected at certain values for the maximum extinction ratio of the element.

Fig. 19 shows theoretical characteristic curves representing the transitions of the extinction ratio at the through port E₃ and the cross port E₄ with p₂ = p₃ = 0 and p₁ varied. In Fig. 19, black spots and black squares represent the extinction ratios of the through port and the cross port, respectively. As seen from these curves, the extinction ratio of the cross port is 40 dB or more when p₁ ranges from 0.032 to 0.039, and the cross port exhibits its maximum extinction ratio when the front-stage partial junction C₃ is formed having p₁ in the vicinity of 0.035616.

In the case of the element having G₀, R, G and W set at the aforementioned values, therefore, the extinction ratio for the cross mode inevitably lowers unless p₁ and p₃ are set at 0.035616 and 0, respectively.

If p₂ is deviated from 0.072, moreover, the maximum extinction ratio for the through mode cannot take the value, 63.06 dB, shown in Fig. 17. As seen from Fig. 18, however, this element exhibits the extinction ratio of at least 40 dB.

### [Embodiment 3]

Another 1-input/2-output directional coupler type optical function element was manufactured. This optical function element is a modified version of the element shown in Fig. 7, in which the length of the junction C₀ is 6 mm, W is 6 µm, Go is 250 µm, G is 3.0 µm, R is 50 mm, the length of the front-stage partial junction C₃ is 249 µm (p₁ = 0.0415), the length of the central partial junction C₅ is 498 µm (p₂ = 0.083), and p₃ is 0. Gaps were formed between the individual partial junctions, as in the case of Embodiment 2.

Fig. 20 shows a theoretical characteristic curve representing the switching characteristic of this element obtained when a TE mode light beam with a wavelength of 1.3 µm is excited at the incidence port E₀, and when only the electrooptical effect is developed by applying reverse bias voltage to the electrodes.

When the element is actually driven by means of the reverse bias voltage, the extinction ratio can be estimated at 30 dB or more if the applied voltage in the cross mode is -8.0 V or if the applied voltage in the through mode is -20.0 V, in view of the conditions of a measurement system.

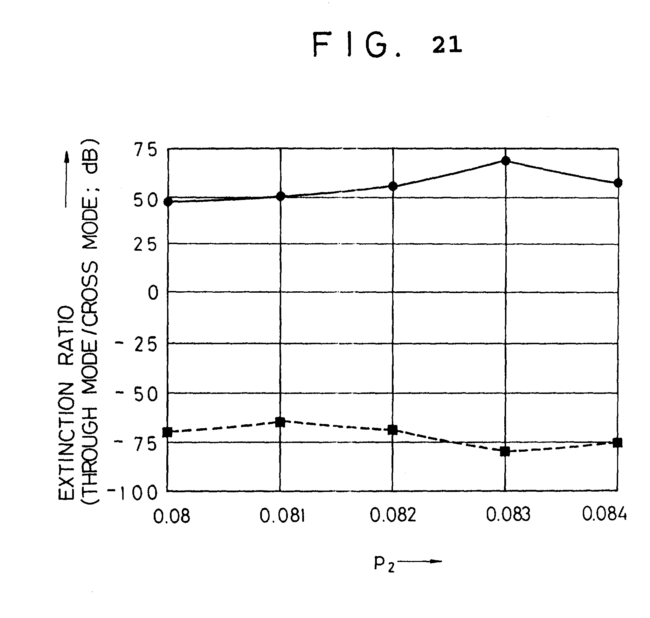

Fig. 21 shows the relationship between the fluctuation of the extinction ratio and the coefficient p₂ of the element observed when the coefficient p₂ is varied to change the length p₂ × L of the central partial junction C₅. In Fig. 21, black spots and black squares represent the through mode and the cross mode, respectively.

The element of this embodiment can also enjoy the extinction ratio of 30 dB or more for either of the through and cross modes.

Thus, in the directional coupler type optical function element according to the present invention, the front- and rear-stage partial junctions serve to remove the asymmetry of connection between the incidence- and emergence-side lead sections of the conventional directional couplers, and prevent the extinetion ratio for the cross mode from lowering. Since the central partial junction is formed having a length such that the extinction ratio for the through mode has its maximum, moreover, the through-mode extinction ratio can be also kept high. In other words, the optical function element of the invention exhibits a high extinction ratio for either of the through and cross modes.

Thus, by incorporating the element of the present invention in an optical communication system, the possibility of cross talk can be lowered, and optical signals can be transmitted with improved accuracy.

In the embodiments described above, the optical function element of the present invention is driven as an optical switch. Alternatively, however, it may be used as a polarizing splitter which simultaneously performs, for example, injection of forward current from the electrodes and application of reverse voltage, thereby separating a TE mode light beam from a TM mode light beam. Further, the element can be used as an optical modulator or wavelength division multiplexer/demultiplexer with high extinction ratio characteristics.

## Claims

1. A directional coupler type optical element comprising:
a junction (C₀) having two parallel optical waveguides (A, B) of equal widths formed of a material exhibiting an electrooptical effect or a material capable of refractive index control by means of an electrical signal;
an optical waveguide (E₀) optically connected to the incidence end (A₁) of one of said two optical waveguides (A, B); and
curved or straight optical waveguides (D₃, E₃; D₄, E₄) optically connected to the respective emergence ends (A₂, B₂) of said two optical waveguides (A, B);
said junction (C₀) including:
a front-stage partial junction (C₄) with electrode (F₁, F₂);
a central partial junction (C₅) ; and
a rear-stage partial junction (C₆) with electrode (F₃, F₄) of the same length as that of the front-stage partial junction (C₄) with electrode (F₁, F₂);
characterised in that said junction (C₀) further comprises:
an additional front-stage partial junction (C₃) for optically coupling between the waveguides (A,B), and optionally an additional rear-stage partial junction (C₇) for optically coupling between the waveguides (A,B), wherein the length(s) of the additional partial junction(s) are such that the extinction ratio of the optical element is 30dB or more.

2. The directional coupler type optical element according to claim 1, wherein said junction (C₀) comprises said additional front-stage partial junction (C₃) and a said additional rear-stage partial junction (C₇).

3. The directional coupler type optical element according to claim 2, wherein the length (p₁) of the additional front-stage partial junction (C₃) and optionally the length (p₃) of the additional rear-stage partial junction (C₇) are selected such that the coupling between the waveguides due to the additional front-stage partial junction (C₃) is substantially equal to that due to the combination of any additional rear-stage partial junction (C₇) and the emergence-side lead section (C₂).

4. The directional coupler type optical element according to claim 3, wherein the length (p₂) of the central partial junction (C₅) is selected to maximise the extinction ratio for the through mode.

5. The directional coupler type optical element according to claim 3 or 4, wherein the length (p₂) of the central partial junction (C₅) is selected such that the coupling between the waveguides at the central partial junction (C₅) is substantially equal to the sum of the incidence-side and emergence-side couplings.

6. A directional coupler type optical element comprising:
a junction (C₀) having two parallel optical waveguides (A, B) of equal widths formed of a material exhibiting an electrooptical effect or a material capable of refractive index control by means of an electrical signal;
optical waveguides (D₁, E₁; D₂, E₂) optically connected to the respective incidence ends (A₁, B₁) of said two optical waveguides (A, B); and
curved or straight optical waveguides (D₃, E₃; D₄, E₄) optically connected to the respective emergence ends (A₂, B₂) of said two optical waveguides (A, B);
said junction (C₀) including:
a front-stage partial junction (C₄) with electrode (F₁, F₂);
a central partial junction (C₅) ; and
a rear-stage partial junction (C₆) with electrode (F₃, F₄) of the same length as that of the front-stage partial junction (C₄) with electrode (F₁, F₂);
characterised in that said junction (C₀) further comprises:
an additional rear-stage partial junction (C₇) for optically coupling between the waveguides (A,B), and optionally an additional front-stage partial junction (C₃) for optically coupling between the waveguides (A,B), wherein the length(s) of the additional partial junction(s) are such that the extinction ratio of the optical element is 30dB or more.

7. The directional coupler type optical element according to claim 6, wherein said junction (C₀) comprises both an additional front-stage partial junction (C₃) and an additional rear-stage partial junction (C₇).

8. The directional coupler type optical element according to claim 6 or 7, wherein the length (p₁) of any additional front-stage partial junction (C₃) and the length (p₃) of the additional rear-stage partial junction (C₇) are selected such that the coupling between the waveguides due to the combination of the incidence-side lead section (C₁) and any additional front-stage partial junction (C₃) is substantially equal to that due to the combination of the additional rear-stage partial junction (C₇) and the emergence-side lead section (C₂).

9. The directional coupler type optical element according to claim 8, wherein the length (p₂) of the central partial junction (C₅) is selected to maximise the extinction ratio for the through mode.

10. The directional coupler type optical element according to claim 8 or 9, wherein the length (p₂) of the central partial junction (C₅) is selected such that the coupling between the waveguides at the central partial junction (C₅) is substantially equal to the sum of the incidence-side and emergence-side couplings.

## Patentansprüche

1. Optisches Element der Art eines Richtkopplers, welches aufweist:
einen Übergang (C₀) mit zwei parallelen optischen Wellenleitern (A, B) von gleicher Breite, die aus einem Material, welches einen elektrooptischen Effekt aufweist, oder einem Material, welches die Brechungszahl mittels eines elektrischen Signals steuern kann, gebildet sind; einen optischen Wellenleiter (E₀), welcher mit dem Eintritt-Ende (A₁) eines der zwei optischen Wellenleiter (A, B) optisch verbunden ist; und
gekrümmte oder gerade optische Wellenleiter (D₃, E₃; D₄, E₄), die mit den entsprechenden Austritt-Enden (A₂, B₂) der zwei optischen Wellenleiter (A, B) optisch verbunden sind;
wobei der Übergang (C₀) aufweist:
einen Vorderabschnitt-Teilübergang (C₄) mit Elektrode (F₁, F₂);
einen mittleren Teilübergang (C₅) ; und
einen Hinterabschnitt-Teilübergang (C₆) mit Elektrode (F₃, F₄) von derselben Länge wie der Vorderabschnitt-Teilübergang (C₄) mit Elektrode (F₁, F₂);
dadurch gekennzeichnet, daß der Übergang (C₀) weiterhin aufweist:
einen zusätzlichen Vorderabschnitt-Teilübergang (C₃) zur optischen Kopplung zwischen den Wellenleitern (A, B) und wahlweise einen zusätzlichen Hinterabschnitt-Teilübergang (C₇) zur optischen Kopplung zwischen den Wellenleitern (A, B), wobei die Länge(n) des/der zusätzlichen Teil-Übergangs/Teil-Übergänge dergestalt ist/sind, daß das Extinktionsverhältnis des optischen Elementes 30dB oder mehr beträgt.

2. Optisches Element der Art eines Richtkopplers nach Anspruch 1, wobei der Übergang (C₀) den zusätzlichen Vorderabschnitt-Teilübergang (C₃) und den zusätzlichen Hinterabschnitt-Teilübergang (C₇) aufweist.

3. Optisches Element der Art eines Richtkopplers nach Anspruch 2, wobei die Länge (p₁) des zusätzlichen Vorderabschnitt-Teilübergangs (C₃) und wahlweise die Länge (p₃) des zusätzlichen Hinterabschnitt-Teilübergangs (C₇) so gewählt sind, daß die Kopplung zwischen den Wellenleitern aufgrund des zusätzlichen Vorderabschnitt-Teilübergangs (C₃) im wesentlichen gleich der Kopplung aufgrund der Kombination jedes zusätzlichen Hinterabschnitt-Teilübergangs (C₇) und des Leitabschnitts (C₂) auf der Austritt-Seite ist.

4. Optisches Element der Art eines Richtkopplers nach Anspruch 3, wobei die Länge (p₂) des mittleren Teilabschnitts (C₅) so gewählt ist, daß das Extinktionsverhältnis für die Durchgangsmode maximiert wird.

5. Optisches Element der Art eines Richtkopplers nach Anspruch 3 oder 4, wobei die Länge (p₂) des mittleren Teilübergangs (C₅) so gewählt ist, daß die Kopplung zwischen den Wellenleitern an dem mittleren Teilübergang (C5) im wesentlichen gleich der Summe der Kopplungen auf der Eintritt-Seite und Austritt-Seite ist.

6. Optisches Element der Art eines Richtkopplers mit: . einem Übergang (C₀) mit zwei parallelen optischen Wellenleitern (A, B) von gleichen Breiten, die aus einem Material, welches einen elektrooptischen Effekt aufweist, oder einem Material, welches die Brechungszahl mittels eines elektrischen Signals steuern kann, gebildet sind; optischen Wellenleitern (D₁, E₁; D₂, E₂), die optisch mit den entsprechenden Eintritt-Enden (A₁, B₁) der zwei optischen Wellenleiter (A, B) verbunden sind; und gekrümmten oder geraden optischen Wellenleitern (D₃, E₃; D₄, E₄), die optisch mit den entsprechenden Austritt-Enden (A₂, B₂) der zwei optischen Wellenleiter (A, B) verbunden sind;
wobei der Übergang (C₀) aufweist:
einen Vorderabschnitt-Teilübergang (C₄) mit Elektrode (F₁, F₂);
einem mittleren Teilübergang (C₅) ; und
einem Hinterabschnitt-Teilübergang (C₆) mit Elektrode (F₃, F₄) derselben Länge wie der Vorderabschnitt-Teilübergang (C₄) mit Elektrode (F₁, F₂);
dadurch gekennzeichnet, daß der Übergang (C₀) weiterhin aufweist:
einen zusätzlichen Hinterabschnitt-Teilübergang (C₇) zur optischen Kopplung zwischen den Wellenleitern (A, B) und wahlweise einen zusätzlichen Vorderabschnitt-Teilübergang (C₃) zur optischen Kopplung zwischen den Wellenleitern (A, B), wobei die Länge(n) des/der zusätzlichen Teilübergangs/Teilübergänge dergestalt ist/sind, daß das Extinktionsverhältnis des optischen Elements 30dB oder mehr beträgt.

7. Optisches Element der Art eines Richtkopplers nach Anspruch 6, wobei der Übergang (C₀) sowohl einen zusätzlichen Vorderabschnitt-Teilübergang (C₃) als auch einen zusätzlichen Hinterabschnitt-Teilübergang (C₇) aufweist.

8. Optisches Element der Art eines Richtkopplers nach Anspruch 6 oder 7, wobei die Länge (p₁) jedes zusätzlichen Vorderabschnitt-Teilübergangs (C₃) und die Länge (p₃) des zusätzlichen Hinterabschnitt-Teilübergangs (C₇) so gewählt sind, daß die Kopplung zwischen den Wellenleitern aufgrund der Kombination des eintrittseitigen Leitabschnitts (C₁) und jedes zusätzlichen Vorderabschnitt-Teilübergangs (C₃) im wesentlichen gleich ist zu der Kopplung aufgrund der Kombination des zusätzlichen Hinterabschnitt-Teilübergangs (C₇) und des austrittseitigen Leitabschnitts (C₂).

9. Optisches Element der Art eines Richtkopplers nach Anspruch 8, wobei die Länge (p₂) des mittleren Teilübergangs (C₅) so gewählt ist, daß das Extinktionsverhältnis für die Durchgangsmode maximiert wird.

10. Optisches Element der Art eines Richtkopplers nach Anspruch 8 oder 9, wobei die Länge (p₂) des mittleren Teilübergangs (C₅) so gewählt ist, daß die Kopplung zwischen den Wellenleitern an dem mittleren Teilübergang (C₅) im wesentlichen gleich der Summe der Kopplungen auf der Eintritt-Seite und Austritt-Seite ist.

## Revendications

1. Elément optique du type coupleur directif comprenant :
une jonction (C0) comportant deux guides d'ondes optiques parallèles (A,B) de largeurs égales, formés en une matière présentant un effet électro-optique ou en une matière dont l'indice de réfraction peut être réglé au moyen d'un signal électrique ;
un guide d'ondes optiques (E0) optiquement connecté à l'extrémité d'incidence (A1) d'un desdits deux guides d'ondes optiques (A,B) ; et
des guides d'ondes optiques courbes ou rectilignes (D3,E3;D4,E4) optiquement connectés aux extrémités d'émergence respectives (A2,B2) desdits deux guides d'ondes optiques (A,B) ;
ladite jonction (C0) incluant :
une jonction partielle d'étage avant (C4) pourvue d'une électrode (F1 ,F2) ;
une jonction partielle centrale (C5) ; et
une jonction partielle d'étage arrière (C6) pourvue d'une électrode (F3,F4) de la même longueur que celle de la jonction partielle d'étage avant (C4) à électrode (F1,F2) ;
caractérisé en ce que ladite jonction (C0) comprend en outre :
une jonction partielle d'étage avant additionnelle (C3) pour couplage optique entre les guides d'ondes (A, B), et optionnellement une jonction partielle d'étage arrière additionnelle (C7) pour couplage optique entre les guides d'ondes (A,B), la ou les longueurs de la jonction ou des jonctions partielles additionnelles étant telles que le rapport d'extinction de l'élément optique est de 30 dB ou plus .

2. Elément optique du type coupleur directif suivant la revendication 1, dans lequel ladite jonction (C0) comprend ladite jonction partielle d'étage avant additionnelle (C3) et une dite jonction partielle d'étage arrière additionnelle (C7).

3. Elément optique du type coupleur directif suivant la revendication 2, dans lequel la longueur (p1) de la jonction partielle d'étage avant additionnelle (C3) et optionnellement la longueur (p3) de la jonction partielle d'étage arrière additionnelle (C7) sont choisies d'une manière telle que le couplage entre les guides d'ondes, dû à la jonction partielle d'étage avant additionnelle (C3), est sensiblement égal à celui qui est dû à la combinaison d'une jonction partielle d'étage arrière additionnelle éventuelle (C7) et de la partie de conducteurs du côté émergence (C2)).

4. Elément optique du type coupleur directif suivant la revendication 3, dans lequel la longueur (p2) de la jonction partielle centrale (C5) est choisie de manière à obtenir le rapport d'extinction maximal pour le mode de traversée.

5. Elément optique du type coupleur directif suivant la revendication 3 ou 4, dans lequel la longueur (p2) de la jonction partielle centrale (C5) est choisie de sorte que le couplage entre les guides d'ondes à l'endroit de la jonction partielle centrale (C5) est sensiblement égal à la somme des couplages du côté incidence et du côté émergence.

6. Elément optique du type coupleur directif comprenant :
une jonction (C0) comportant deux guides d'ondes optiques parallèles (A,B) de largeurs égales, formés en une matière présentant un effet électro-optique ou en une matière dont l'indice de réfraction peut être réglé au moyen d'un signal électrique ;
des guides d'ondes optiques (D1,E1;D2,E2) optiquement connectés aux extrémités d'incidence respectives (A1,B1) desdits deux guides d'ondes optiques (A,B) ; et
des guides d'ondes optiques courbes ou rectilignes (D3,E3;D4,E4) optiquement connectés aux extrémités d'émergence respectives (A2,B2) desdits deux guides d'ondes optiques (A,B) ;
ladite jonction (C0) incluant :
une jonction partielle d'étage avant (C4) pourvue d'une électrode (F1,F2) ;
une jonction partielle centrale (C5) ; et
une jonction partielle d'étage arrière (C6) pourvue d'une électrode (F3,F4) de la même longueur que celle de la jonction partielle d'étage avant (C4) à électrode (F1,F2) ;
caractérisé en ce que ladite jonction (C0) comprend en outre :
une jonction partielle d'étage arrière additionnelle (C7) pour couplage optique entre les guides d'ondes (A,B), et optionnellement une jonction partielle d'étage avant additionnelle (C3) pour couplage optique entre les guides d'ondes (A,B), la ou les longueurs de la jonction ou des jonctions partielles additionnelles étant telles que le rapport d'extinction de l'élément optique est de 30 dB ou plus.

7. Elément optique du type coupleur directif suivant la revendication 6, dans lequel ladite jonction (C0) comprend à la fois une jonction partielle d'étage avant additionnelle (C3) et une jonction partielle d'étage arrière additionnelle (C7).

8. Elément optique du type coupleur directif suivant la revendication 6 ou 7, dans lequel la longueur (pl) d'une jonction partielle d'étage avant additionnelle éventuelle (C3) et la longueur (p3) de la jonction partielle d'étage arrière additionnelle (C7) sont choisies de sorte que le couplage entre les guides d'ondes, dû à la combinaison de la partie de conducteurs du côté incidence (C1) et d'une jonction partielle d'étage avant additionnelle éventuelle (C3) est sensiblement égal à celui qui est dû à la combinaison de la jonction partielle d'étage arrière additionnelle (C7) et de la partie de conducteurs du côté émergence (C2).

9. Elément optique du type coupleur directif suivant la revendication 8, dans lequel la longueur (p2) de la jonction partielle centrale (C5) est choisie de manière à obtenir le rapport d'extinction maximal pour le mode de traversée.

10. Elément optique du type coupleur directif suivant la revendication 8 ou 9, dans lequel la longueur (p2) de la jonction partielle centrale (C5) est choisie de sorte que le couplage entre les guides d'ondes à l'endroit de la jonction partielle centrale (C5) est sensiblement égal à la somme des couplages du côté incidence et du côté émergence.
